# EUROPÄISCHE PATENTANMELDUNG

(11) **EP 0 990 543 A2**
(43) Veröffentlichungstag der Anmeldung: **05.04.2000**
(21) Anmeldenummer: 98118457.5
(22) Anmeldetag: 30.09.1998
(51) Int. Cl.: B60J 3/02

(54) **Blendenschutzeinrichtung für ein Fahrzeug**

(71) Anmelder: Volkswagen Aktiengesellschaft, 38436 Wolfsburg (DE)
(72) Erfinder: Hayn, Hans-Joachim, 38448 Wolfsburg (DE); Karg, Horst, 38442 Wolfsburg (DE)

(57) **Zusammenfassung**

Die Erfindung betrifft eine Blendschutzeinrichtung für ein Fahrzeug mit einer Sonnenblende, die zwischen einer vorbestimmten Nichtgebrauchsposition und einer Gebrauchsposition gegenüber einem Faurzeugaufbau- oder Verkleidungsteil verstellbar ist. Sie löst die Aufgabe, die Blendschutzeinrichtung so zu gestalten, daß diese, auch bei Anordnung in einer Mulde am Fahrzeugaufbau- oder Verkleidungsteil, einfach und zuverlässig handhabbar ist. Dazu wirkt die Sonnenblende (1) mit dem Fahrzeugaufbau- oder Verkleidungsteil (3) in ihrer Nichtgebrauchsposition mit einem vorgespannten und durch eine Druckausübung betätigbaren Tip-Mechanismus (7) zusammen, der in der Nichtgebrauchsposition eine dieser entsprechenden Raststellung innehat und durch eine Druckausübung auf die Sonnenblende (1) aus der Raststellung drückbar ist und sich in Folge davon unter Verstellen der Sonnenblende in eine Zwischen- oder Gebrauchsposition entspannt.

## Beschreibung

Die Erfindung betrifft eine Blendschutzeinrichtung für ein Fahrzeug mit einer Sonnenblende, die gegenüber einem Fahrzeugaufbau- oder Verkleidungsteil verstellbar ist, insbesondere zur Anordnung im Frontbereich des Fahrzeuges.

Neben Sonnenblenden für den Fahrer und den Beifahrer in einem Fahrzeug, die von Hand zwischen einer Nichtgebrauchsposition am Fahrzeughimmel und einer Gebrauchsposition hinter der Windschutzsheibe verschwenkbar sind, sind Blendschutzeinrichtungen bekannt, die einem gesteigerten Komfortbedürfnis und gewachsener Ansprüche an die Innenraumgestaltung Rechnung tragen. Diese sind elektromotorisch betrieben und durch Knopfdruck betätigbar, wie beispielsweise in der DE 91 05 372.2 U1 oder in der DE 29 41 646 A1 beschrieben, oder gar sensorisch gesteuert (DE 41 18 393 C2). Es sind auch Sonnenblenden bekannt, die zu den vorhandenen Sonnenblenden für den Fahrer und den Beifahrer bei Bedarf anordbar sind, um den mehr oder weniger großen Spalt zwischen diesen abzudecken, durch den insbesondere der Fahrer von der Sonne geblendet werden kann. Neben solchen, die eine Metallisierungsschicht (DE 44 40 002 A1) aufweisen und entweder auf den inneren Rückspiegel aufsetzbar oder an einer an der Windschutzscheibe angeordneten Metallfolie angeordnet und an dieser magnetisch fixierbar sind (DE 89 14 848.7 U1), ist auch eine schwenkbar am Fahrzeughimmel im Randbereich zur Windschutzscheibe gelagerte schmale Zusatzsonnenblende, die von Hand zwischen einer Nichtgebrauchspostion am Fahrzeughimmel und einer Stellung an der Windschutzscheibe schwenkbar und in diesem Bereich in eine Gebrauchspostion bringbar ist, im Einsatz. Durch eine entsprechende schwergängige Lagerung ist diese Zusatzsonnenblende in den jeweils gewählten Positionen fixiert, auch in ihrer Nichtgebrauchsposition.

Diese von Hand betätigbaren Sonnenblenden können auch in einer Mulde angeordnet sein. Bei Anordnung in einer Mulde, insbesondere zur Verbesserung der Innenraumgestaltung, ergibt sich der Nachteil einer verschlechterten Handhabung, da die Sonnenblende schlecht greifbar und aus der Mulde schwenkbar ist. Die Anordnung einer zusätzlichen Griffmulde würde gegebenenfalls die Gefälligkeit der Innenraumgestaltung stören.

Es ist deshalb Aufgabe der Erfindung, eine Blendschutzeinrichtung für ein Fahrzeug mit einer Sonnenblende nach dem Oberbegriff des Anspruchs 1 zu schaffen, die, auch bei Anordnung in einer Mulde am Fahrzeugaufbau- oder Verkleidungsteil, einfach und zuverlässig handhabbar ist.

Diese Aufgabe wird bei einer Blendschutzeinrichtung nach dem Oberbegriff des Anspruchs 1 durch dessen kennzeichnende Merkmale gelöst.

Danach weist die Blendschutzeinrichtung eine Sonnenblende auf, die gegenüber dem Fahrzeugaufbau- oder Verkleidungsteil zwischen einer vorbestimmten Nichtgebrauchsposition und einer Gebrauchsposition verstellbar ist und die erfindungsgemäß in ihrer Nichtgebrauchsposition mit diesem über einen vorgespannten und durch eine Druckausübung betätigbaren Tip-Mechanismus zusammenwirkt. Dabei hat der Tip-Mechanismus in der Nichtgebrauchsposition eine dieser entsprechenden Raststellung inne und ist aus dieser durch eine Druckausübung auf die Sonnenblende drückbar und enspannt sich in Folge unter Verstellen der Sonnenblende in eine Zwischen- oder Gebrauchsposition.

Damit ist die Sonnenblende durch einen kurzzeitigen Druck in Richtung auf das Fahrzeugaufbau- oder Verkleidungsteil auf einfache Weise und zuverlässig aus ihrer Nichtgebrauchsposition lösbar, wird in ihre Gebrauchsposition gebracht oder in deren Richtung und kann dann bequem von Hand in die Gebrauchsposition gebracht werden. Die Schwierigkeit des Fassens der Sonnenblende in ihrer Nichtgebrauchsposition ist damit beseitigt.

Dabei kann die Sonnenblende an dem Fahrzeugaufbau- oder Verkleidungsteil schwenkbar gehaltert sein, so daß sie zwischen der Nichtgebrauchsposition und der Zwischen- oder Gebrauchsposition verschwenkbar ist und durch den Tip-Mechanismus in letztere geschwenkt werden kann.

Als Tip-Mechanismus kann dabei einer der in anderen Bereichen verwendeten Tip-Mechanismen verwendet werden, der ein in einem Gehäuse angeordnetes und durch eine Druckfeder beaufschlagtes Druckelement mit einer Kurvenführung für ein Gleitelement aufweist, das gegen die Kraft der Druckfeder aus einer Ausgangsstellung in eine Raststellung drückbar und in dieser arretiert ist und durch eine erneute oder weitere Druckausübung in dieser Raststellung aus dieser in eine Stellung drückbar ist, aus der es durch die Druckfeder wieder in seine Ausgangsstellung zurückgedrückt wird. Der auf das Druckelement auszuübende Druck wird dabei jeweils über die Sonnenblende aufgebracht. Die Nichtgebrauchspostion derselben korrespondiert mit der Raststellung des Druckelementes und die Ausgangsstellung des Druckelementes wiederum mit der Gebrauchsposition derselben oder einer Position zwischen deren Nichtgebrauchs- und deren Gebrauchsposition.

Aus optischen Gründen ist es dabei vorteilhaft, den Tip-Mechanismus in das Fahrzeugaufbau- oder Verkleidungsteil zu integrieren. Dabei kann die Sonnenblende gegebenenfalls auch mit einem Betätigungselement für diesen versehen sein, das überdies ein Rastglied zur Verrastung und Arretierung am Druckelement aufweisen kann. Eine umgekehrte Anordnung ist grundsätzlich ebenfalls möglich.

Der Tip-Mechanismus sollte fahrzeuginnenraumseitig im wesentlichen bündig mit dem Fahrzeugaufbau- oder Verkleidungsteil abschließen, um die Sonnenblende in ihrer Nichtgebrauchsposition nahe an diesem anordnen zu können. Diese kann dort in einer Mulde versenkt sein. Bei dieser Anordnung ist auch der Tip-Mechanismus im Bereich der Mulde in das Fahrzeugaufbau- oder Verkleidungsteill zu integrieren. Dabei muß die Sonnenblende in ihrer Nichtgebrauchsposition in einem geringen Abstand von der Mulde angeordnet sein. damit sie in Richtung auf das Druckelement bewegt werden kann, um dieses gegen die Druckfeder aus seiner Rastatellung in die Stellung drücken zu können, aus der es durch die Druckfeder wieder in seine Ausgangsstellung zurückdrückbar ist. Bei einer elastischen Verkleidung des Fahrzeugaufbau- oder Verkleidungsteiles kann auf diesen Abstand verzichtet werden, da dann die Sonnenblende in diese hineindrückbar ist.

Die Erfindung wird nachstehend an einem Ausführungsbeispiel näher erläutert. In der zugehörigen Zeichnung zeigen schematisch:
- Fig. 1:: eine zwischen der Sonnenblende des Fahrers und des Beifahrers in einem Personenkraftwagen angeordnete Blendschutzeinrichtung mit einer Sonnenblende in ihrer Nichtgebrauchsposition,
- Fig. 2:: die Sonnenblende in einer Gebrauchsposition,
- Fig. 3:: einen Schnitt III-III durch den Fahrzeughimmel mit in Nichtgebrauchsposition befindlicher Sonnenblende,
- Fig. 4:: diesen Schnitt mit aus der Nichtgebrauchsposition herausgeschwenkter Sonnenblende,
- Fig. 5:: diesen Schnitt mit in Gebrauchaposition befindlicher Sonnenblende,
- Fig. 6:: einen mit der Sonnenblende zusammenwirkenden Tip-Mechanismus in seiner Ausgangsstellung,
- Fig. 7:: diesen Tip-Mechanismus in seiner Raststellung,
- Fig. 8:: eine Seitenansicht des Tip-Mechanismus in der Ausgangsstellung mit angedeuteter Sonnenblende und
- Fig. 9:: eine Rückansicht des im Tip-Mechanismus angeordneten Druckelementes.

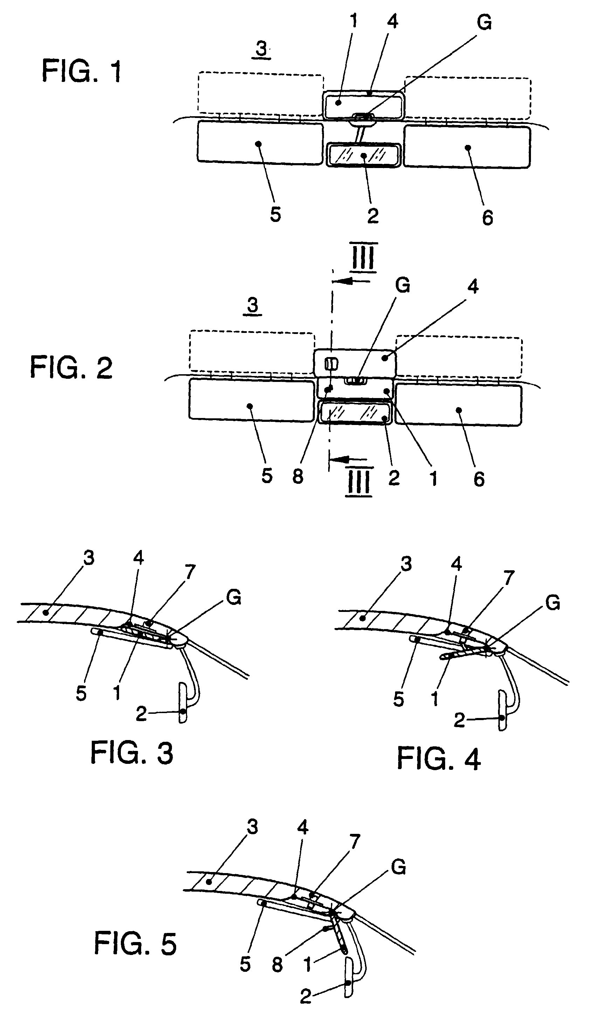

Fig. 1 zeigt eine erfindungsgemäße Blendschutzeinrichtung mit einer Sonnenblende 1, die in einer Nichtgebrauchsposition oberhalb des inneren Rückspiegels 2 eines Fahrzeuges an dessen Fahrzeughimmel 3 und dort in einer Mulde 4 angeordnet ist. Die Sonnenblende ist an einem schwergängigen Schamiergelenk G (nicht weiter ausgeführt) schwenkbar gehaltert. Die beiden Hauptsonnenblenden 5 und 6 für den Fahrer und den Beifahrer sind in ihre Gebrauchsposition heruntergeklappt. Die Sonnenblende 1 ist in ihrer Größe so gewählt, daß sie den Bereich zwischen dem Rückspiegel 2, den beiden Hauptsonnenblenden 5 und 6 und dem Fahrzeughimmel 3 im wesentichen ausfüllt, wenn sie in ihre Gebrauchsposition geschwenkt ist. Diese ist in den Figuren 2 und 5 dargestellt.

Fig. 3 zeigt die Anordnung der Sonnenblende 1 in einer Seitenansicht bei geschnittenem Fahrzeughimmel 3 (Schnitt III-III) im Bereich eines mit der Sonnenblende erfindungsgemäß zusammenwirkenden und im Fahrzeughimmel versenkt angeordneten Tip-Mechanismus 7. Die Sonnenblende 1 ist in der Mulde 4 versenkt angeordnet, jedoch in einem geringen Abstand vom Fahrzeughimmel 3 gehalten. Fig. 4 zeigt den in einer Ausgangsstellung befindlichen Tip-Mechanismus 7 mit der bei dieser gegebenen Position der Sonnenblende 1, aus der dieser durch und mit der Sonnenblende 1 in die in Fig. 3 gezeigte Raststellung gedrückt werden kann. Die Sonnenblende weist ein Betätigungselement 8 für den Tip-Mechanismus 7 auf.

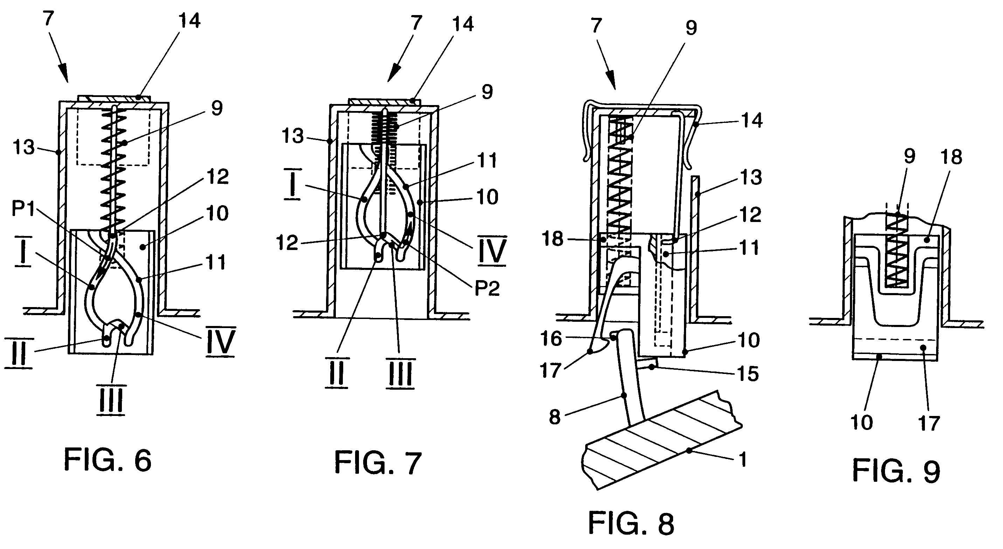

Der Tip-Mechanismus 7 ist in den Fig. 6 bis 9 dargestellt. Er weist in bekannter Weise ein durch eine Druckfeder 9 beaufschlagtes Druckelement 10 mit einer Kurvenführung 11 auf, in der ein beweglich angeordnetes Gleitelement 12 angeordnet ist, das an einem das Druckelement 10 umschließenden Gehäuse 13 gelagert ist. Die Kurvenführung 11 weist verschiedene Abschnitte I bis IV auf, die in ihrer Tiefe unterschiedlich sind und zwischen denen Stufen angeordnet sind, die in einer Richtung ausgebildet sind, wodurch - im Gegenuhrzeigersinn betrachtet - der Anfang eines jeweils folgenden Abschnittes tiefer gelegt ist. Das Gleitelement 12 ist durch ein Federelement 14 beaufschlagt und somit stets an den Grund der Kurvenführung 11 gedrückt.

Fig. 6 zeigt den Tip-Mechanismus 7 in seiner Ausgangsstellung. Fig. 8 zeigt ebenfalls diese Ausgangsstellung, jedoch in einer Seitenansicht und mit anliegendem Betätigungselement 8, das zur Anlage am Druckelement 10 einen Mitnahmestift 15 aufweist. Auf der diesem gegenüberliegenden Seite des Betätigungselementes 8 ist auch ein Rastnoppen 16 angeordnet, der für den Eingriff mit einer an der der Kurvenführung 11 abgewandten Seite des Druckelementes 10 (Rückseite) angeordneten Rastzunge 17 vorgesehen ist. Fig. 9 zeigt schließlich ein am Druckelemnt 10 ausgebildetes Widerlager 18 für die Druckfeder 9.

Wird nun die Sonnenblende 1 in ihre Nichtgebrauchsposition gebracht, greift sie in der in den Figuren 4 und 8 dargestellten Position mit dem Mitnahmestift 15 an dem in seiner Ausgangsstellung befindlichen Druckelement 10 an und drückt dieses in das Gehäuse 13, wobei die Rastzunge 17 auf das Betätigungselement 8 zu gedrückt wird und in Eingriff mit dem Rastnoppen 16 gelangt, wodurch die Sonnenblende 1 mit dem Druckelement 10 und dem Tip-Mechanismus 7 verrastet wird (Fig. 3 und 7) Bei diesem Vorgang gleitet das Gleitelement 12 entlang des Pfeiles P1, dargestellt in Fig. 6, entlang des Abschnittes I der Kurvenführung 11 unter Passieren der zwischen den Abschnitten I und II und auch II und III angeordneten Stufen bis in den Bereich III, dargestellt in Fig. 7. In dieser Raststellung ist die durch die Druckfeder 9 beaufschlagte Kurvenführung 11 durch das Gleitelement 12 arretiert, wenn die Druckausübung ausgesetzt wird. Die Druckfeder 9 beaufschlagt dabei das Druckelement 10 in Richtung der Sonnenblende 1, wobei jedoch das im Abschnitt III befindliche Gleitelement 12 eine Bewegung in diese Richtung verhindert. Damit sind das Druckelement 10 und die an diesem arretierte Sonnenblende 1 in dieser Position, die deren Nichtgebrauchsposition entspricht, fixiert.

Bei einer Druckausübung auf die Sonnenblende 1 in dieser Nichtgebrauchsposition wird die Kurvenführung 11 mit der zwischen dem Bereich II und dem Bereich III ausgebildeten Stufe und der unteren Schräge des Bereiches II gegen das Gleitelement 12 gedrückt, das dadurch über die zwischen den Bereichen III und IV ausgebildete Stufe in den Bereich IV gelangt. Wird die Druckausübung in dieser Stellung beendet, gleitet das durch die komprimierte Druckfeder 9 beaufschlagte Druckelement 10 mit seiner Kurvenführung entlang des Gleitelementes 12 nach unten, bis dieses in der Kurvenführung nach Passieren der zwischen dem Bereich IV und I angeordneten Stufe wieder seine Ausgangsstellung im Bereich I erreicht hat (Fig. 1). Bei diesem Vorgang wird die Sonnenblende I aus ihrer Nichtgebrauchsposition herausgeschwenkt, entrastet (Fig. 8) und kann von Hand gegriffen und in die gewünschte Gebrauchsstellung geschwenkt werden.

## Patentansprüche

1. Blendschutzeinrichtung für ein Fahrzeug mit einer Sonnenblende, die zwischen einer vorbestimmten Nichtgebrauchsposition und einer Gebrauchspostion gegenüber einem Fahrzeugaufbau- oder Verkleidungsteil verstellbar ist, **dadurch gekennzeichnet,** daß die Sonnenblende (1) mit dem Fahrzeugaufbau- oder Verkleidungsteil (3) in ihrer Nichtge-brauchsposition mit einem vorgespannten und durch eine Druckausübung betätigbaren Tip-Mechanismus (7) zusammenwirkt , der in der Nichtgebrauchsposition eine dieser entspre-chenden Raststellung innehat und durch eine Druckausübung auf die Sonnenblende aus der Raststellung drückbar ist und sich entspannt, wodurch die Sonnenblende in eine Zwischen- oder Gebrauchsposition verstellt wird.

2. Blendschutzeinrichtung nach Anspruch 1, **dadurch gekennzeichnet,** daß die Sonnenblende (1) schwenkbar an dem Fahrzeugaufbau- oder Verkleidungsteil (3) gehaltert und zwischen der Nichtgebrauchsposition und der Zwischen- oder Gebrauchsposition verschwenkbar ist.

3. Blendschutzeinrichtung nach Anspruch 1 oder 2 , **dadurch gekennzeichnet,** daß der Tip-Mechanismus (7) ein in einem ortsfesten Gehäuse (13) angeordnetes und durch eine Druck-feder (9) beaufschlagtes Druckelement (10) mit einer Kurvenführung (11) für ein Gleitele-ment (12) aufweist, daß das Druckelement (10) gegen die Kraft der Druckfeder (9) aus einer Ausgangsstellung in die der Nichtgebrauchsposition der Zusatzsonnenblende (1) entspre-chenden Raststellung drückbar und in dieser durch das Gleitelement (12) arretiert ist, und daß das Druckelement (10) aus dieser Raststellung in eine Stellung drückbar ist, aus der es durch die Druckfeder (9) wieder in die Ausgangsstellung zurückgeführt wird.

4. Blendschutzeinrichtung nach Anspruch 1 oder 3, **dadurch gekennzeichnet,** daß der Tip-Mechanismus (7) im Fahrzeugaufbau- oder Verkleidungsteil (3) angeordnet ist und fahrzeug-innenraumseitig im wesentlichen bündig mit diesem abschließt..

5. Blendschutzeinrichtung nach Anspruch 3, **dadurch gekennzeichnet,** daß die Sonnenblende (1) ein Betätigungselement (8) für das Druckelement (10) aufweist.

6. Blendschutzeinrichtung nach Anspruch 4, **dadurch gekennzeichnet,** daß das Betätigungselement (8) ein Rastglied (16) zur Arretierung am Druckelement (10) aufweist.

7. Blendschutzeinrichtung nach einem der Ansprüche 1 bis 5, **dadurch gekennzeichnet,** daß die Sonnenblende (1) in einer Mulde (4) im Fahrzeugaufbau- oder Verkleidungsteil (3) angeordnet ist, in deren Bereich auch der Tip-Mechanismus (7) in dieses (3) integriert ist.

8. Blendschutzeinrichtung nach einem der vorhergehenden Ansprüche, **dadurch gekennzeichnet,** daß diese in ihrer Nichtgebrauchsposition fahrzeuginnenraumseitig im Bereich der Anordnung des Tip-Mechanismus (7) mit einer Markierung versehen ist.
